# EUROPEAN PATENT APPLICATION

(11) **EP 4 786 376 A1**
(43) Date of publication of application: **05.08.2026**
(21) Application number: 25155637.9
(22) Date of filing: 03.02.2025
(51) Int. Cl.: B65G 1/137, B65G 1/04

(54) **OPERATION OF A PORT OF AN AUTOMATED STORAGE AND RETRIEVAL SYSTEM**

(71) Applicant: AutoStore Technology AS, 5578 Nedre Vats (NO)
(72) Inventor: GJERDEVIK, Øystein, 5578 Nedre Vats (NO)
(74) Representative: Kilburn & Strode LLP

(57) **Abstract**

The disclosure relates to method for operating a port of an automated storage and retrieval system, the method comprising: presenting, at a first opening of the port, a first container; receiving, within the first container, waste packaging; and conveying, via the port, the first container with the waste packaging held therein to a storage grid of the automated storage and retrieval system.

## Description

### TECHNICAL FIELD

The disclosure relates to operation of a port. More particularly, it relates to a method for operating a port of an automated storage and retrieval system, to a port, and to an automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

The ports are provided to present items stored within the containers for retrieval from the containers to fulfil an order for those items. As such, the purpose of the grid is to store the items within the containers and the purpose of the ports is to provide an interface enabling retrieval of items from the containers.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a bulk item according to the present disclosure;
Fig. 6 shows a port according to the present disclosure;
Fig. 7 shows a further port according to the present disclosure;
Fig. 8 shows a perspective view of a storage system according to the present disclosure;
Fig. 9 shows a method for operating a port according to the present disclosure.

### DETAILED DESCRIPTION

In overview, the disclosure relates to a method for operating a port of an automated storage and retrieval system. The method includes presenting a first container at a first opening of the port. The method further includes receiving, within the first container, waste packaging. As such, the first container, which may be empty when initially presented at the first opening, subsequently contains the waste packaging. The waste packaging may have previously been used to package a bulk item including multiple individual items. The bulk item may have been presented at a second opening of the port within a second container. A picking robot or human operator may remove the packaging from the bulk item in order to separate one of the items therefrom, and may place the packaging in the first container as waste packaging. The first container holding the waste packaging therein is then conveyed by the port to a storage grid of the automated storage and retrieval system. The waste packaging can thereby be conveyed, via the port, to a location or device at which it can be disposed of.

For automated storage and retrieval systems storing individual items, rather than bulk items, means for removing waste packaging may not be required. Even in arrangements in which waste packaging is generated, this has previously been removed manually or using a conveyor system outside of the storage grid. Such approaches lead to the need for additional infrastructure outside of the grid, which increases engineering and logistical complexity. Moreover, since such conveyor systems would be located around the periphery of the storage grid, they may take up space that could otherwise be used for additional ports, to provide access to delivery or transport vehicles, etc.

In contrast, the present inventor has realised that, while the automated storage and retrieval system is configured for the purpose of storing items and allowing retrieval of such items, there are additional functions it can be adapted to provide. This increases the versatility of the automated storage and retrieval system. In particular, the present inventor has identified that the infrastructure of the automated storage and retrieval system itself, including the port itself, can be used for removal of the waste packaging. This provides a more integrated solution. The techniques of the present disclosure can thereby reduce engineering complexity, can reduce the total amount of machinery required in automated warehouse solutions and can make more efficient use of available operational space.

### Automated storage and retrieval system overview

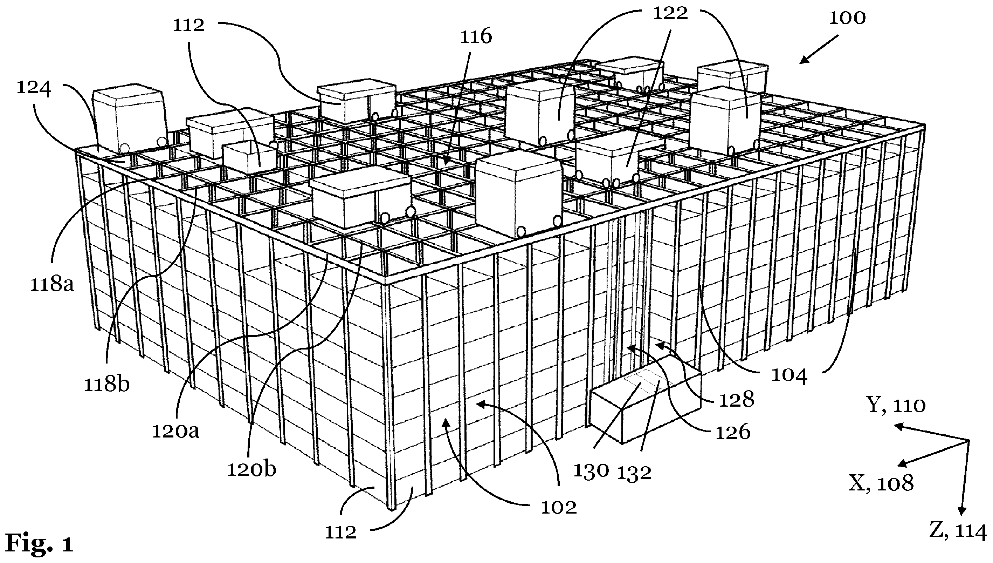

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

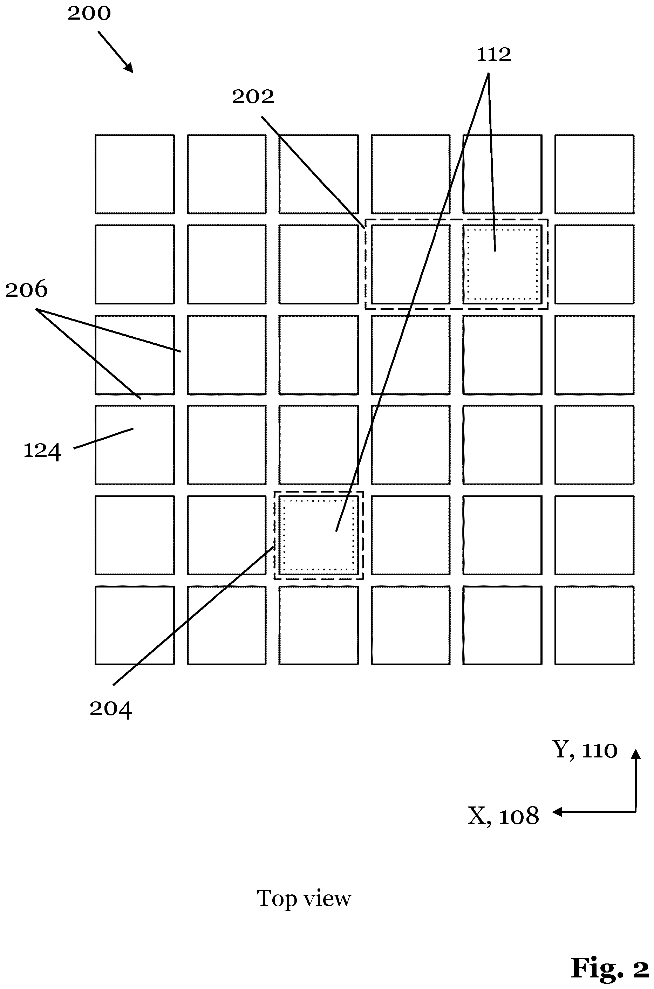

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

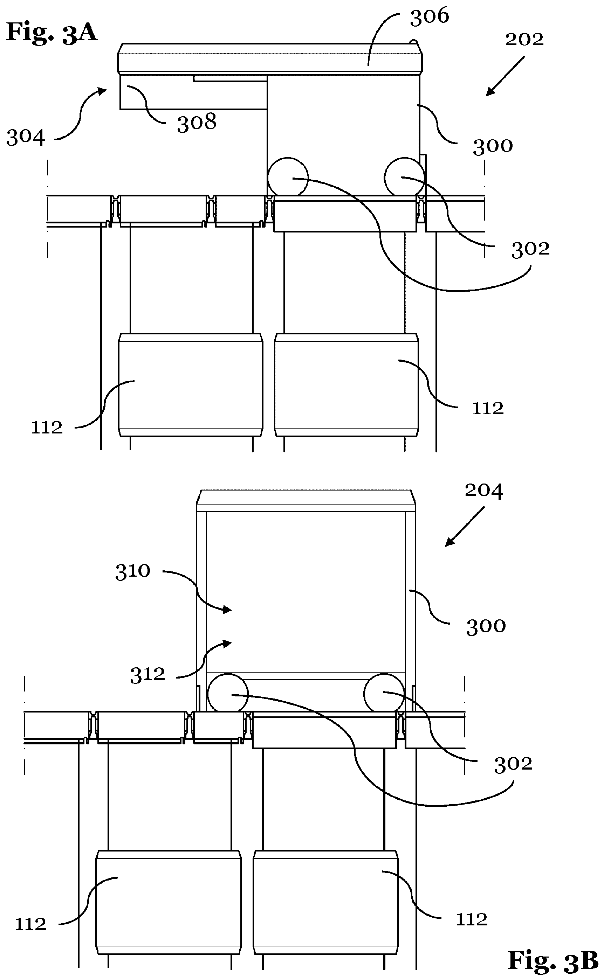

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

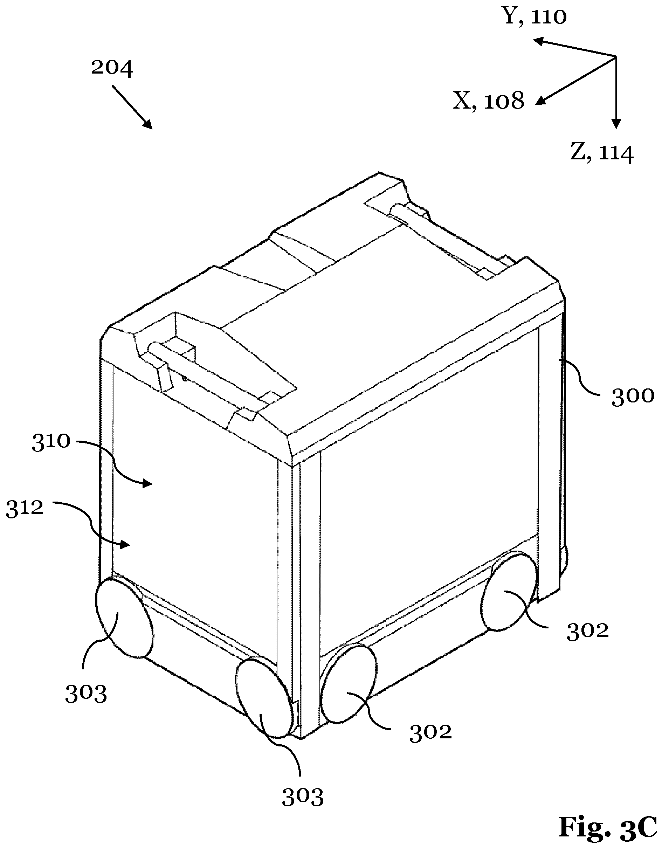

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

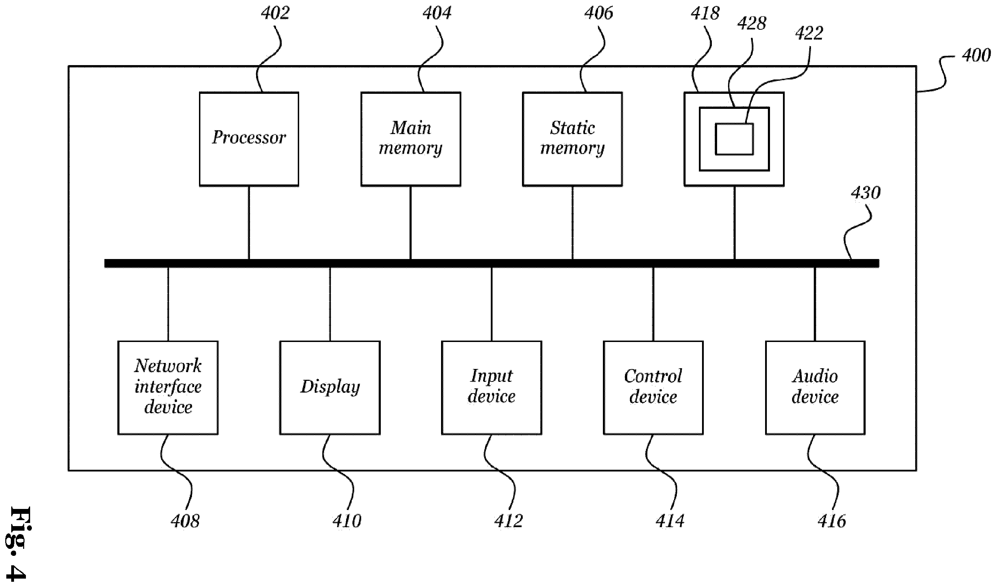

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Description of specific improvements

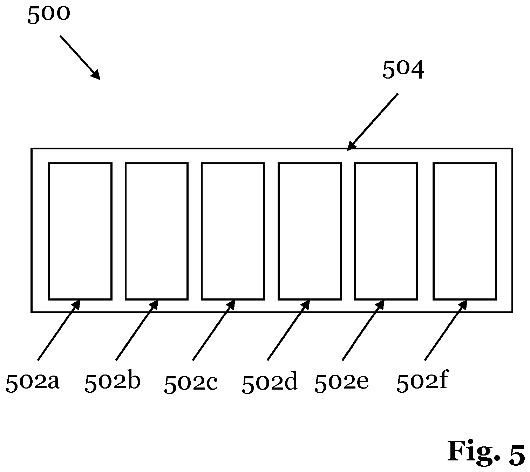

Fig. 5 shows a bulk item 500 according to the present disclosure. The bulk item 500 comprises a plurality of items 502a, 502b, 502c, 502d, 502e, 502f (collectively referenced as 502). Each of the items 502 may be an individual object or product suitable for delivery as part of an order without the remainder of the items 502. Each of the items 502 may typically be the same as each of the other items 502, though this is not required. In Fig. 5, the plurality of items is shown as comprising six items by way of non-limiting example. It will be appreciated that any number of items 502 may make up the bulk item 500, including more than or less than six items 502.

The plurality of items 502 may be held within packaging 504 or fixed together using packaging 504. Therefore, the bulk item 500 may comprise the plurality of items 502 and the packaging 504 holding them together. The packaging 504 may take any suitable form appropriate for holding the relevant items 502 of the bulk item 500. In some non-limiting examples, the packaging 504 may comprise one or more of plastic wrapping, cable ties, a cardboard box, a pouch, a carton, a bag, etc.

The bins 112 (also referred to as containers 112 herein) of the storage grid 100 (see Fig. 1) may hold within them various different objects. In some examples, a first container 112 may hold one or more individual items, which may not be packaged together. A second container 112 may hold one or more bulk items 500 comprising a plurality of items 502 and packaging 504. The individual items may be generally retrieved and delivered as part of direct e-commerce orders. The bulk items 502 may be generally retrieved and used by a retailer to replenish a store.

Accommodating storage of bulk items 500 within the grid 100 can improve the efficiency of insertion of items into the grid 100 because bulk items are more likely to have regular dimensions that can be more easily manipulated automatically by a robot. Moreover, in some scenarios, a particular type of item may be ordered for which there no remaining instances of stored individually within containers 112 of the grid 100. However, a plurality of this particular type of item may be stored as a bulk item 500 within a container 112 of the grid 100. As described herein, the container 112 holding the bulk item may be conveyed to a port and an instruction may be generated to open the packaging 504 and separate out one of the items 502 from the remainder of the items 502. While this increases the versatility of storage and retrieval of items, it will typically generate waste packaging that needs to be removed and processed in an appropriate way.

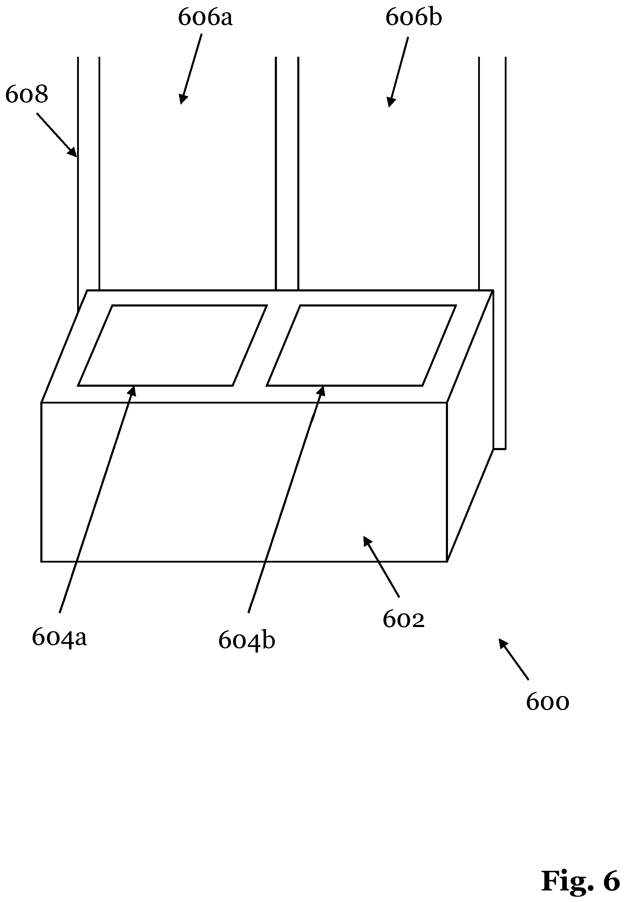

Fig. 6 shows a port 600 according to the present disclosure. The port 600 may generally correspond to port 130, 132 depicted in Fig. 1.

The port 600 may comprise a housing 602. The housing 602 may comprise one or more panels supported on a frame. The housing 602 may prevent access to an interior of the port 600 for improved safety and operational efficiency.

The port 600 may comprise a first opening 604a. The port 600 may comprise a second opening 604b. The first and second openings may collectively be referred to as openings 604. Each of the openings 604 may comprise a hole or gap or aperture in the housing 602. Each of the openings 604 may enable access to a respective container 112 held within the port 600, i.e. within the housing 602 thereof. A respective container 112 may be supported in a respective presentation position immediately below the respective opening 604. A picking robot or human operator may retrieve items (or bulk items 500) from a container 112 through the respective opening 604 when it is in the respective presentation position. The port 600 may comprise a respective cover or hatch configured to selectively cover and uncover each of the openings 604. This may improve the safety of the port 600 through only enabling access to the containers 112 at appropriate times, e.g. when no mechanical parts within the port 600 are currently in motion.

Fig. 6 also depicts port columns 606a, 606b (collectively referenced as 606 herein). These may generally correspond to port columns 126, 128 referred to in relation to Fig. 1. These are defined between vertical frame members 608, which may generally correspond to vertical frame members 104 referred to in relation to Fig. 1. The port columns 606 may comprise generally empty columns through which robots 122 can raise and/or lower the containers 112 between the top of the grid 100 and the port 600. A conveyance means such as a conveyor, carousel or robot may be provided at the bottom of the port 600 and may be configured to move containers 112 between the bottom of the port columns 606 and the openings 604.

As described herein, a container 112 presented at one of the openings 604 (e.g. at the second opening 604b) may hold within it a bulk item 500 comprising a plurality of items 502 and packaging 504 (see Fig. 5). It may be desired to separate out one of the items (e.g. item 502a) from the remainder of the items (e.g. items 502b-f). A controller of the port 600 or of the automated storage and retrieval system may provide an instruction to separate out one of the items 502 from the bulk item 500. This may comprise generating and transmitting a computer-executable instruction to separate the item to a picking robot in proximity to/with access to the second opening 604b. Alternatively, this may comprise generating and transmitting the computer-executable instruction to separate the item to a display screen comprised in or associated with the port 600, for display by the display screen to a human operator.

The picking robot may comprise one or more gripping, cutting and/or suction mechanisms configured to engage with and hold the packaging 504 and/or to engage with and hold an item 502. The picking robot may comprise one or more movement mechanisms configured to move the gripping, cutting and/or suction mechanisms, and the packaging 504/item 502, between containers 112 to perform the operations described herein. The movement mechanisms may, by way of example, comprise one or more beams pivotable or otherwise rotatable relative to each other.

A further container 112 may be presented at the other of the openings 604 (e.g. at the first opening 604a). The first opening 604a may, when it is initially presented at the first opening 604a, be empty such that it is ready to be filled. The picking robot or human operator, after having removed some or all of the packaging 504 from the bulk item 500, may dispose the removed packaging (now referred to as waste packaging 504) in the further container 112 by dropping it through the first opening 604a into the further container 112 in the presentation position therebelow.

The container 112 with the waste packaging 504 therein may be conveyed to the grid 100. For example, the port 600 may transport the container 112 to the bottom of the port column 606 using the conveyance means. A robot 122 may lift the container 112 with the waste packaging 504 therewithin to the top of the grid 100. As further described herein, the robot 122 may transport the container 122 with the waste packaging 504 therewithin to a waste receptacle.

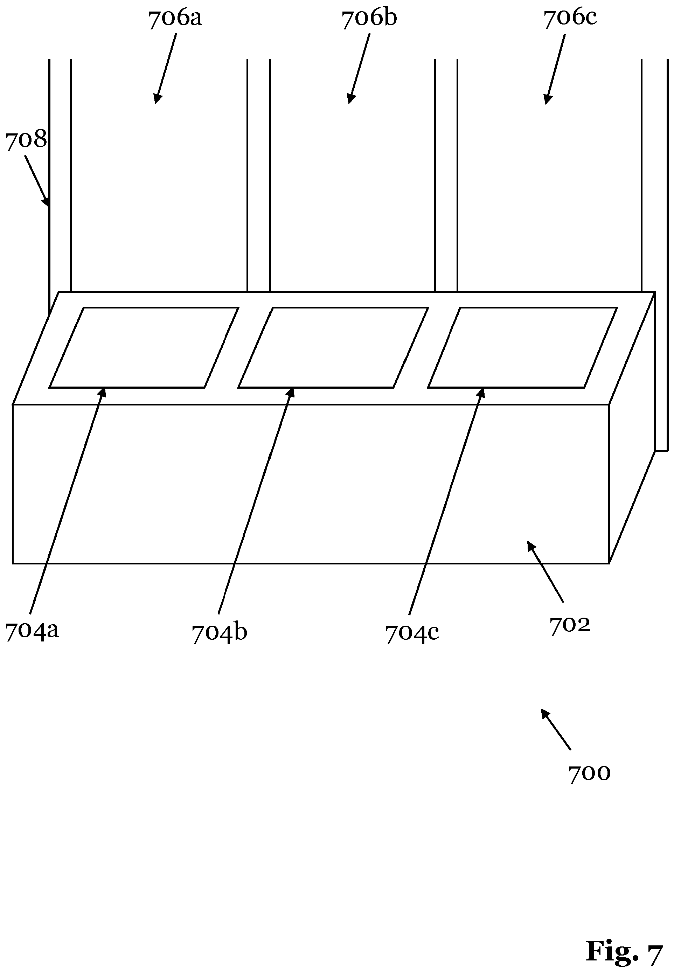

Fig. 7 shows a further port 700 according to the present disclosure. The port 700 is generally similar to and comprises corresponding features and functions to the port 600 described in relation to Fig. 6, except where described otherwise below.

The port 700 may comprise housing 702 generally corresponding to housing 602 described in relation to Fig. 6. The port 700 may comprise a first opening 704a and a second opening 704b generally corresponding respectively to the first and second openings 604a, 604b described in relation to Fig. 6. The port 700 may additionally comprise a third opening 704c which may generally correspond in form and function to the first and second openings 704a, 704b. Fig. 7 further shows a first port column 706a and a second port column 706b generally corresponding respectively to the first and second port columns 606a, 606b described in relation to Fig. 6. Fig. 7 additionally shows a third port column 706c which may generally correspond in form and function to the first and second port columns 704a, 704b. The third port column 706c may be aligned with the third opening 704c. The port columns 706 are defined between vertical frame members 708, which generally correspond to vertical frame members 608 described in relation to Fig. 6.

In brief, while the port 600 is a two-opening port, the port 700 is a three-opening port. The first opening 704a may be used for presenting a container 112 for receiving waste packaging 504. The second opening 704b may be used for presenting a container 112 holding a bulk item 500. The third opening 704c may be used for presenting an additional container 112. This additional container 112 may initially be empty, but may receive through the third opening 704c, via the picking robot or human operator, the item 502 separated from the remaining items 502 making up the bulk item 500. This additional container 112 may be transported back into the grid such that the item 502 is now stored as an individual item. Alternatively, this additional container 112 may remain at the third opening 704c to receive additional items as part of an order consolidation process. The additional container 112 may be transported to a delivery location or shipping vehicle for fulfilment of an order.

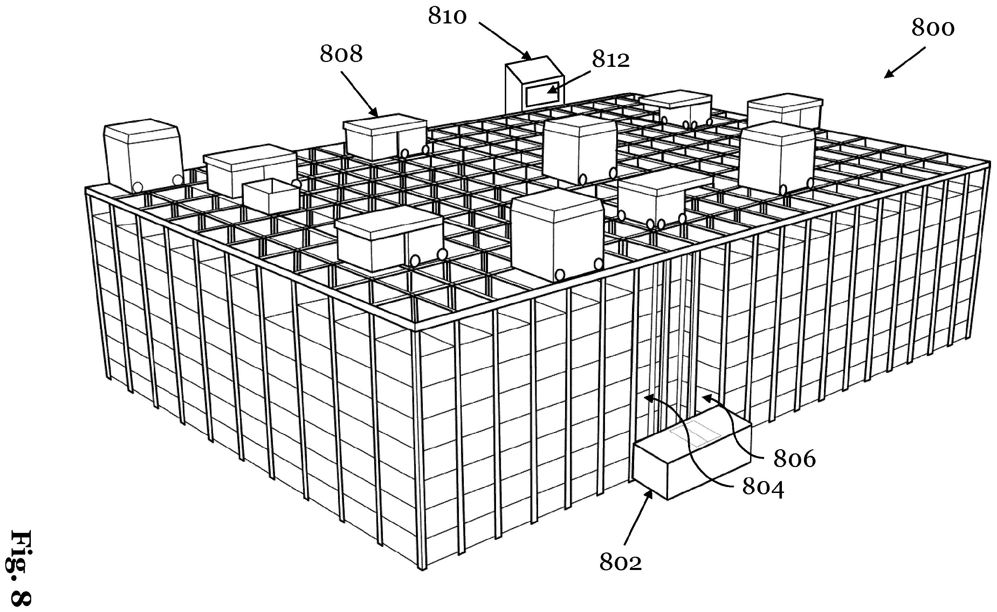

Fig. 8 shows a perspective view of a storage system 800 according to the present disclosure. The system 800 of Fig. 8 generally corresponds in form and function to the storage system of Fig. 1 except where described otherwise herein. The system 800 maybe described as an automated storage and retrieval system.

The system 800 comprises a port 802, which may generally correspond to ports 130/132, 600, 700 as described herein. The system 800 comprises port columns 804, 806, which may generally correspond to port columns 126, 128, 606, 706 described herein. The system 800 comprises one or more robots 808, which may generally correspond to robots 122 as described herein.

As described herein, a robot 812 may lift a container 112 holding waste packaging 504 from the port 802 up through the port column 804/806. The robot 808 may move along the rail system at the top of the grid thereby transporting the container 112 across the grid. The system 800 may comprise a waste packaging receptacle 810. The waste packaging receptacle 810 may be configured to receive the container 112 comprising the waste packaging 504, or may be configured to receive the waste packaging 504 from the container 112. The waste packaging receptacle 810 may comprise an aperture 812 configured to receive the container 112/the waste packaging 504.

The waste packaging receptacle 810 may be disposed adjacent to the grid/at the periphery of the grid. As depicted in Fig. 8, the waste packaging receptacle 810 is disposed by way of non-limiting example adjacent to the top of the grid to be on a level with the one or more robots 122. In other examples, the waste packaging receptacle 810 may be disposed below the top level of the grid such that the container 112/waste packaging 504 can be lowered/dropped into the waste packaging receptacle 810 from above by the robot 122. In some examples, the waste packaging receptacle 810 may be disposed on the floor adjacent to the bottom of the grid. In examples in which the waste packaging receptacle 810 is disposed below the top surface of the grid, the aperture 812 maybe disposed in a top surface of the waste packaging receptacle 810. In some examples, the system 800 may comprise a plurality of the waste packaging receptacles 810 arranged in various positions around the grid.

In some examples, the robot 122 may be configured to tilt/rotate the container 112 using its lifting mechanism in order to empty the waste packaging 504 from the container 112 through use of gravity. In some examples, the waste packaging receptacle may comprise a biasing mechanism configured to interact with the container 112 suspended from the robot 122 in order to effect this tilting/rotation. In some examples, the waste packaging receptacle 810 may be configured to receive the container 112 through the aperture 812 and rotate the container 112 so as to empty the waste packaging 504 therefrom into a chute or vessel therebelow. As would be appreciated by the skilled person, the waste packaging receptacle 810 may take any suitable form in order to fulfil the function of receiving waste packaging 504 in an appropriate manner. The waste packaging 504 may thereafter be removed from the waste packaging receptacle 810 for disposal in a waste or recycling facility.

In some examples, the waste packaging receptacle 810 comprises a compressor configured to compress the waste packaging 504 therein in order to reduce its volume. This may increase the amount of time it takes to fill the waste packaging receptacle 810 and thereby reduce the frequency with which it needs to be emptied.

In some examples, the system 800 maybe configured to discriminate between waste packaging 504 formed from different materials. The controller of the port 802/of the system 800 as a whole may comprise or have access to a database comprising information on the form of packaging 504 used to package each bulk item 500. For example, a first bulk item 500 may comprise cardboard packaging 504 and a second bulk item 500 may comprise plastic packaging. As such, the controller has access to the type of waste packaging 504 that will be disposed in the container 112 in the first opening 604a/704a when separating an item 502 from a particular bulk item 500, and therefore to the type of waste packaging 504 that the robot 122 will be conveying.

The controller may be communicatively coupled to the robot 122 and may direct it to dispose of the waste packaging 504 in a selected waste packaging receptacle 810 of a plurality of waste packaging receptacles 810 comprised in the system 800. Each waste packaging receptacle 810 of the plurality of waste packaging receptacles 810 may be configured to receive a different respective type of packaging 504, e.g. formed of a different respective material. The controller may select the selected waste packaging receptacle 810 based on the material forming the waste packaging 504 that is currently being conveyed. For example, the controller may direct a robot 122 to convey cardboard waste packaging 504 to a first waste packaging receptacle 810 configured to receive and process cardboard, and may direct a robot 122 to convey plastic waste packaging 504 to a second waste packaging receptacle 810 configured to receive and process plastic. This may facilitate more efficient and more complete recycling of the various types of waste packaging 504 that may be used without mixing of different materials.

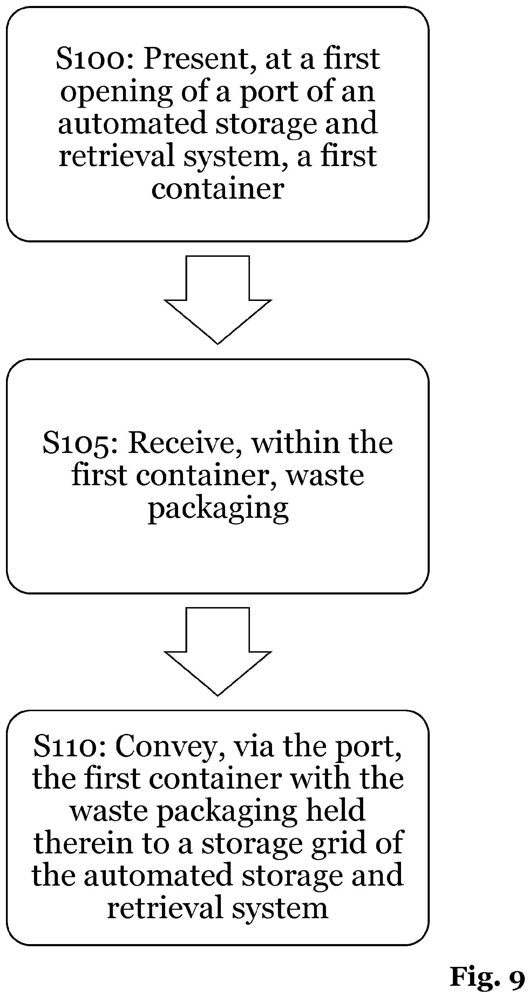

Fig. 9 shows a method for operating a port according to the present disclosure. The method may be performed by any of the ports 130, 132, 600, 700, 802 described herein. Any of the ports 130, 132, 600, 700, 802 may be configured to perform the method of Fig. 9.

In block S100, the method comprises presenting, at a first opening of a port of an automated storage and retrieval system, a first container. The first container may initially be empty.

In block S105, the method comprises receiving, within the first container, waste packaging. The waste packaging may have been removed from a bulk item presented in a second container at a second opening of the port, in order to separate an item from other items making up the bulk item. The separated item may be disposed in a third container presented at a third opening of the port.

In block S110, the method comprises conveying, via the port, the first container with the waste packaging held therein to a storage grid of the automated storage and retrieval system. The first container may be transported through the port to the bottom of a port column by conveyance means of the port such as a conveyor, carousel or robot. The container may be lifted up through the port column to the top of the storage grid by a robot. The robot may transport the container with the waste packaging held therein to a waste receptacle for disposing/recycling of the waste packaging.

As described herein, the automated storage and retrieval system, and in particular the port thereof, is not merely used for storage and retrieval of items, but instead its functionality has been extended to incorporate additional tasks. In particular, the port, grid and robots themselves can be used to transport and dispose of waste packaging. This makes the automated storage and retrieval system more versatile in terms of both the functions it can perform and in terms of its enhanced ability to handle both individual and bulk items efficiently. This also provides a more integrated solution which reduces the need for additional infrastructure around the grid and additional engineering complexity. This is particularly important in storage and retrieval systems because in such systems it is desirable for available operational space and efficiency of processing orders are optimised. Moreover, due to the high through flow of goods, a large amount of waste packaging may be generated. Since, as described herein, waste packaging is removed at the port itself, further integrating the waste disposal into the operation of the port itself provides a particularly efficient and integrated solution.

### Penultimate comments

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A method for operating a port of an automated storage and retrieval system, the method comprising:
presenting, at a first opening of the port, a first container;
receiving, within the first container, waste packaging; and
conveying, via the port, the first container with the waste packaging held therein to a storage grid of the automated storage and retrieval system.

2. The method of claim 1, comprising presenting, at a second opening of the port, a second container with a bulk item stored therein, the bulk item comprising a plurality of items held within packaging.

3. The method of claim 2, wherein the waste packaging received within the first container comprises the packaging of the bulk item once removed from the bulk item.

4. The method of claim 3, comprising providing an instruction to separate an item of the plurality of items from a remainder of the plurality of items.

5. The method of claim 4, wherein the providing the instruction comprises transmitting a computer-executable instruction to separate the item to a picking robot.

6. The method of claim 4, wherein the providing the instruction comprises transmitting a computer-executable instruction to separate the item to a display screen for display thereon.

7. The method of any of claims 4-6, comprising:
presenting, at a third opening of the port, a third container; and
receiving, within the third container, the item separated from the remainder of the plurality of items.

8. The method according to any preceding claim, wherein the conveying of the first container comprises lifting, by a robotic container-handling vehicle, the first container from the port to a top of the storage grid.

9. The method according to claim 8, comprising transporting, by the robotic container-handling vehicle moving along rails at the top of the storage grid, the first container with the waste packaging held therein to a waste packaging receptacle.

10. The method according to claim 9, wherein the waste packaging receptacle comprises a compressor configured to receive and compress the waste packaging.

11. The method according to claim 9 or claim 10, comprising:
identifying a material from which the waste packaging is formed; and
transporting, by the robotic container-handling vehicle, the first container with the waste packaging held therein to one waste packaging receptacle selected from a plurality of waste packaging receptacles based on the identified material.

12. The method according to claim 11, wherein each waste packaging receptacle of the plurality of waste packaging receptacles is configured to receive a different respective type of waste packaging.

13. The method according to claim 11 or claim 12, wherein the identifying of the material from which the waste packaging is formed is performed by accessing a database comprising information on the form of packaging used in different bulk items.

14. A port of an automated storage and retrieval system, the port being configured to perform the method of any of claims 1-7.

15. An automated storage and retrieval system comprising the port of claim 14, a storage grid, a robotic container-handling vehicle and a waste packaging receptacle, the automated storage and retrieval system being configured to perform the method of any of claims 1-13.

## Amended claims

### Amended claims in accordance with Rule 137(2) EPC.

1. A method for operating a port (130, 132, 600, 700, 802) of an automated storage and retrieval system (800), the method comprising:
presenting (S100), at a first opening (604a, 704a) of the port (130, 132, 600, 700, 802), a first container (112), wherein the first opening (604a, 704a) comprises an aperture in a housing (602, 702) of the port (130, 132, 600, 700, 802);
receiving (S105), within the first container (112), waste packaging (504); and
conveying (S110), via the port (130, 132, 600, 700, 802), the first container (112) with the waste packaging (504) held therein to a storage grid (100) of the automated storage and retrieval system (800),
wherein the conveying of the first container (112) comprises lifting, by a robotic container-handling vehicle (122) of the automated storage and retrieval system (800), the first container (112) from the port (130, 132, 600, 700, 802) to a top of the storage grid (100);
the method comprising presenting, at a second opening (604b, 704b) of the port (130, 132, 600, 700, 802), a second container (112) with a bulk item (500) stored therein, the bulk item (500) comprising a plurality of items (502) held within packaging (504), wherein the second opening (604b, 704b) comprises an aperture in the housing (602, 702) of the port (130, 132, 600, 700, 802),
wherein the waste packaging (504) received within the first container (112) comprises the packaging (504) of the bulk item (500) once removed from the bulk item (500).

2. The method of claim 1, comprising providing an instruction (422) to separate an item (502a) of the plurality of items (502) from a remainder (502b-f) of the plurality of items (502).

3. The method of claim 2, wherein the providing the instruction (422) comprises transmitting a computer-executable instruction (422) to separate the item (502a) to a picking robot.

4. The method of claim 2, wherein the providing the instruction (422) comprises transmitting a computer-executable instruction (422) to separate the item (502a) to a display screen (410) for display thereon.

5. The method of any of claims 2-4, comprising:
presenting, at a third opening (704c) of the port (130, 132, 600, 700, 802), a third container (112), wherein the third opening (704c) comprises an aperture in the housing of the port (130, 132, 600, 700, 802); and
receiving, within the third container (112), the item (502a) separated from the remainder (502b-f) of the plurality of items (502).

6. The method according to claim 1, comprising transporting, by the robotic container-handling vehicle (122) moving along rails (118, 120) at the top of the storage grid (100), the first container (112) with the waste packaging (504) held therein to a waste packaging receptacle (810).

7. The method according to claim 6, wherein the waste packaging receptacle (810) comprises a compressor configured to receive and compress the waste packaging (504).

8. The method according to claim 6 or claim 7, comprising:
identifying a material from which the waste packaging (504) is formed; and
transporting, by the robotic container-handling vehicle (122), the first container (112) with the waste packaging (504) held therein to one waste packaging receptacle (810) selected from a plurality of waste packaging receptacles (810) based on the identified material.

9. The method according to claim 8, wherein each waste packaging receptacle (810) of the plurality of waste packaging receptacles (810) is configured to receive a different respective type of waste packaging (504).

10. The method according to claim 8 or claim 9, wherein the identifying of the material from which the waste packaging (504) is formed is performed by accessing a database comprising information on the form of packaging (504) used in different bulk items (500).

11. An automated storage and retrieval system (800) comprising a port (130, 132, 600, 700, 802), a storage grid (100), a robotic container-handling vehicle (122) and a waste packaging receptacle (810), the automated storage and retrieval system (800) being configured to perform the method of any of claims 1-10.
